# EUROPEAN PATENT SPECIFICATION

(11) **EP 4 163 838 B1**
(45) Date of publication and mention of the grant of the patent: **17.12.2025**
(21) Application number: 22196318.4
(22) Date of filing: 19.09.2022
(51) Int. Cl.: G06N 3/092, G06N 3/0985

(54) **LEARNING DEVICE, COMMUNICATION DEVICE, UNMANNED VEHICLE, WIRELESS COMMUNICATION SYSTEM, LEARNING METHOD, AND COMPUTER-READABLE STORAGE MEDIUM**
LERNVORRICHTUNG, KOMMUNIKATIONSVORRICHTUNG, UNBEMANNTES FAHRZEUG, DRAHTLOSKOMMUNIKATIONSSYSTEM, LERNVERFAHREN UND COMPUTERLESBARES SPEICHERMEDIUM
DISPOSITIF D'APPRENTISSAGE, DISPOSITIF DE COMMUNICATION, VÉHICULE SANS PILOTE, SYSTÈME DE COMMUNICATION SANS FIL, PROCÉDÉ D'APPRENTISSAGE ET SUPPORT D'INFORMATIONS LISIBLE PAR ORDINATEUR

(30) Priority: 21.09.2021 JP 2021153356
(43) Date of publication of application: 12.04.2023
(73) Proprietor: Mitsubishi Heavy Industries, Ltd., Tokyo 100-8332 (JP)
(72) Inventor: Kataoka, Yujiro, Chiyoda-ku, Tokyo, 100-8332 (JP); Ito, Masayuki, Chiyoda-ku, Tokyo, 100-8332 (JP); Matsunami, Natsuki, Chiyoda-ku, Tokyo, 100-8332 (JP)
(74) Representative: Hoffmann Eitle

(56) References cited:
- AL-SAADI AHMED ET AL: "Multi-rate medium access protocol based on reinforcement learning", 2014 IEEE INTERNATIONAL CONFERENCE ON SYSTEMS, MAN, AND CYBERNETICS (SMC), IEEE, 5 October 2014 (2014-10-05), pages 2875 - 2880, XP032693667, DOI: 10.1109/SMC.2014.6974366
- PRASHANTH A K ACHARYA ET AL: "Rate Adaptation in Congested Wireless Networks through Real-Time Measurements", IEEE TRANSACTIONS ON MOBILE COMPUTING, IEEE SERVICE CENTER, LOS ALAMITOS, CA, US, vol. 9, no. 11, 1 November 2010 (2010-11-01), pages 1535 - 1550, XP011311135, ISSN: 1536-1233
- CHAAB WAFAA AL ET AL: "Efficient rate adaptation algorithm in high-dense vehicular ad hoc network", 2017 IEEE 13TH MALAYSIA INTERNATIONAL CONFERENCE ON COMMUNICATIONS (MICC), IEEE, 28 November 2017 (2017-11-28), pages 23 - 28, XP033328973, DOI: 10.1109/MICC.2017.8311725

## Description

### Field

The present disclosure relates to a learning device, a communication device, an unmanned vehicle, a wireless communication system, a learning method, and a computer-readable storage medium.

### Background

Technologies for controlling unmanned aerial vehicles are known. For example, Patent Literature 1 discloses a technique for broadcasting geolocation (geographic location) information from an unmanned aerial vehicle to inform others of the current geolocation of the unmanned aerial vehicle.

AL-SAADI AHMED ET AL: "Multi-rate medium access protocol based on reinforcement learning",2014 IEEE INTERNATIONAL CONFERENCE ON SYSTEMS, MAN, AND CYBERNETICS (SMC), IEEE, 5 October 2014 (2014-10-05), pages 2875-2880, relates to a reinforcement algorithm which adaptively updates a transmission rate in order to increase the success rate of accessing a channel without interfering with other nodes in a wireless mesh network.

### Citation List

### Patent Literature

Patent Literature 1: Japanese Patent No. 6853897 Summary

### Technical Problem

In an unmanned vehicle system including a plurality of unmanned vehicles, in order to allow the unmanned vehicles to act in cooperation with each other, transmitting information at a high rate is desired because the information on each unmanned vehicle is required in real time, in addition to the policies of other unmanned vehicles obtained by reinforcement learning. For this reason, the unmanned vehicle system forms, for example, a time division multiple access (TDMA) network so that collisions of radio waves transmitted by the unmanned vehicles is prevented, in which slots for transmitting information are set depending on the number of unmanned vehicles in the unmanned vehicle system.

When the unmanned vehicle system includes a large number of unmanned vehicles, such as tens or hundreds of unmanned vehicles, slots to be occupied by individual unmanned vehicles are required, and the overhead for reserving the slots may degrade throughput. Possible ways to resolve the throughput degradation include increasing the wireless bandwidth, increasing transmission power, and improving receiving sensitivity performance. However, increasing the wireless bandwidth may not be allowed to be licensed due to the possibility of interference of communication with other stations, and increasing transmission power leads to increase of the weight of the radio communication device and therefore is disadvantageous for size reduction. As a result, it may be difficult to establish an unmanned vehicle system.

An object of the present disclosure is therefore to provide a learning device, a communication device, an unmanned vehicle, a wireless communication system, a computer-implemented learning method, and a computer-readable storage medium, in which reinforcement learning is applied to the design of wireless communication to establish an unmanned vehicle system appropriately, and performance improvement that is difficult to achieve only with conventional wireless communication designs can be achieved.

### Solution to Problem

The present invention is defined in the appended independent claims. Further preferred embodiments are described in the dependent claims.

### Advantageous Effects of Invention

According to the present disclosure, an unmanned vehicle system can be established appropriately, and performance improvement that is difficult to achieve only with conventional wireless communication designs can be achieved.

### Brief Description of Drawings

FIG. 1 is an illustration of learning using a learning model according to embodiments.
FIG. 2 is a block diagram illustrating a configuration example of a learning device according to embodiments.
FIG. 3 is a flowchart illustrating an example of a learning process according to embodiments.
FIG. 4 is a diagram illustrating a configuration example of an unmanned vehicle system according to embodiments.

### Description of Embodiments

Embodiments according to the present invention will be described in detail below based on the drawings.

### Embodiments

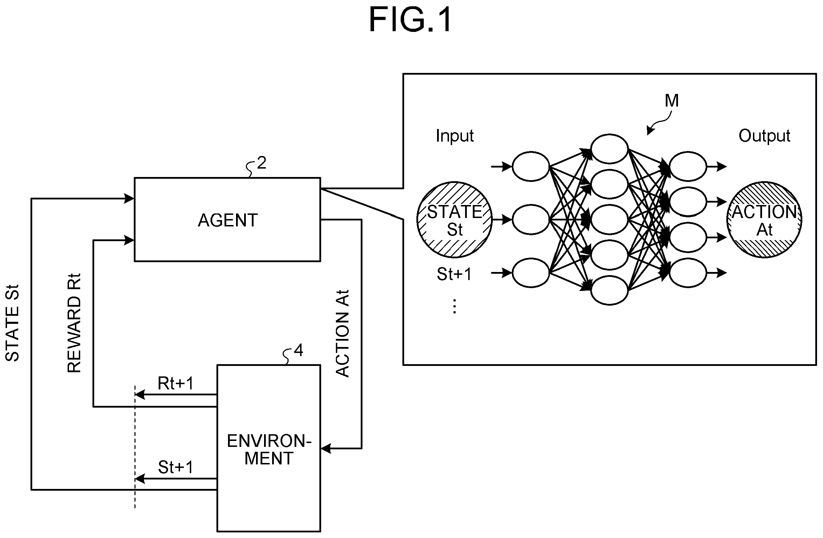

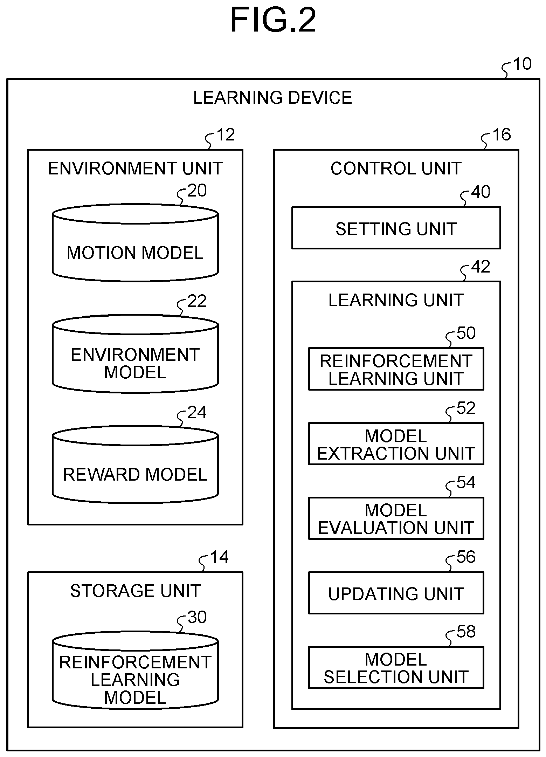

A learning device 10 and a learning method according to the present embodiment are a device and a method for allowing a learning model including hyperparameters to learn. FIG. 1 is an illustration of learning using a learning model according to the present embodiment. FIG. 2 is a block diagram illustrating a configuration example of a learning device according to the present embodiment.

### Learning Using Learning Model

First of all, referring to FIG. 1, learning using a learning model M will be described. The learning model M is installed in an agent 2 that performs an action At. For example, a machine capable of performing operation, such as robot, vehicle, ship, or aircraft, is applicable as the agent 2. The agent 2 performs a predetermined action At under a predetermined environment 4 using the learning model M.

As illustrated in FIG. 1, the learning model M is a neural network having a plurality of nodes. The neural network is a network having a plurality of nodes connected to each other and has a plurality of layers each including a plurality of nodes. The parameters of the neural network include weights and biases between nodes. Other parameters of the neural network include hyperparameters such as the number of layers of a hierarchy, the number of nodes, and the learning rate. In the present embodiment, the weights and the biases between nodes of the learning model M are learned.

Learning using the learning model M will now be described. Learning includes imitation learning and reinforcement learning. Imitation learning is supervised learning, in which the hyperparameters of the learning model M are learned so that the agent 2 performs a predetermined action At when a predetermined state St is input under a predetermined environment 4. Reinforcement learning is unsupervised learning, in which the hyperparameters of the learning model M are learned so that a reward Rt given to the agent 2 under a predetermined environment 4 is maximized.

In reinforcement learning, the agent 2 acquires a state St from the environment 4 and acquires a reward Rt from the environment 4. The agent 2 then selects an action At from the learning model M based on the acquired state St and reward Rt. When the agent 2 performs the selected action At, the state St of the agent 2 makes a transition to a state Sₜ₊₁ in the environment 4. In addition, the agent 2 is given a reward Rₜ₊₁ based on the performed action Aₜ, the state St before the transition, and the state Sₜ₊₁ after the transition. In reinforcement learning, the above learning is repeated for an evaluable predetermined number of steps so that the reward Rt given to the agent 2 is maximized.

In the present disclosure, the learning device 10 learns a learning model to be installed in a computer in order to appropriately set the performance requirement of the communication device of an unmanned vehicle. The information transfer rate is determined for the communication device of an unmanned vehicle, and reinforcement learning for the determined information transfer rate is performed. When the learning device 10 determines that first performance requirement is satisfied for the determined information transfer rate, the information transfer rate is slowed down, and reinforcement learning is performed to satisfy second performance requirement.

In the present disclosure, the unmanned vehicle may be any unmanned vehicle. Examples of the unmanned vehicle include aircrafts, ships, and vehicles.

### Learning Device

The description returns to FIG. 2. As illustrated in FIG. 2, the learning device 10 includes an environment unit 12, a storage unit 14, and a control unit 16.

The environment unit 12 provides an environment for performing reinforcement learning for a learned model. The environment unit 12 includes a motion model 20, an environment model 22, and a reward model 24. The environment unit 12 provides an environment for performing reinforcement learning, based on the motion model 20, the environment model 22, and the reward model 24. Specifically, the environment unit 12 gives a reward to the learned model and derives a state of the learned model that changes with an action.

The storage unit 14 is a memory that stores various information. The storage unit 14 stores, for example, information such as computations of the control unit 16 and computer programs. The storage unit 14 includes, for example, at least one of a random access memory (RAM), a main storage device such as a read-only memory (ROM), and an external storage device such as a hard disk drive (HDD). The storage unit 14 stores a reinforcement learning model 30.

The reinforcement learning model 30 includes a plurality of learned models in reinforcement learning. The reinforcement learning model 30, for example, stores a plurality of learned models learned at each learning step.

The control unit 16 controls the operation of each unit of the learning device 10. The control unit 16 is implemented by, for example, a central processing unit (CPU) or a micro processing unit (MPU) executing a computer program stored in the storage unit 14 or the like using the RAM or the like as a work area. The control unit 16 may be implemented by an integrated circuit such as an application-specific integrated circuit (ASIC) or a field programmable gate array (FPGA). The control unit 16 may be implemented by a combination of hardware and software.

The control unit 16 includes a setting unit 40 and a learning unit 42.

The setting unit 40 sets various conditions for performing reinforcement learning. The setting unit 40 sets, for example, a first requirement value for a predetermined parameter of the communication device. The setting unit 40 sets, for example, action decision model (state and action), reward function, deep reinforcement learning algorithm, model granularity, and hyperparameters. In other words, the setting unit 40 constructs an environment for performing reinforcement learning. The details of the setting unit 40 will be described later.

The learning unit 42 performs learning of a learning model. The learning unit 42 includes a reinforcement learning unit 50, a model extraction unit 52, a model evaluation unit 54, an updating unit 56, and a model selection unit 58.

The reinforcement learning unit 50 performs learning based on rewards given by the environment unit 12. The details of the reinforcement learning unit 50 will be described later.

The model extraction unit 52 extracts, as a learned model, a learning model in which the number of learning steps of reinforcement learning by the reinforcement learning unit 50 is equal to or greater than a predetermined number. The details of the model extraction unit 52 will be described later.

The model evaluation unit 54 evaluates the learned model. The model evaluation unit 54 determines whether the performance of the learned model extracted by the model extraction unit 52 has reached first performance requirement. The details of the model evaluation unit 54 will be described later.

The updating unit 56 updates a requirement value set for a predetermined parameter of the communication device. When the model evaluation unit 54 determines that the performance of the learned model has reached first performance requirement, the updating unit 56 updates the first requirement value to a second requirement value different from the first requirement value. The details of the updating unit 56 will be described later.

The model selection unit 58 selects a learned model to be installed in the communication device. The details of the model selection unit 58 will be described later.

### Learning Process

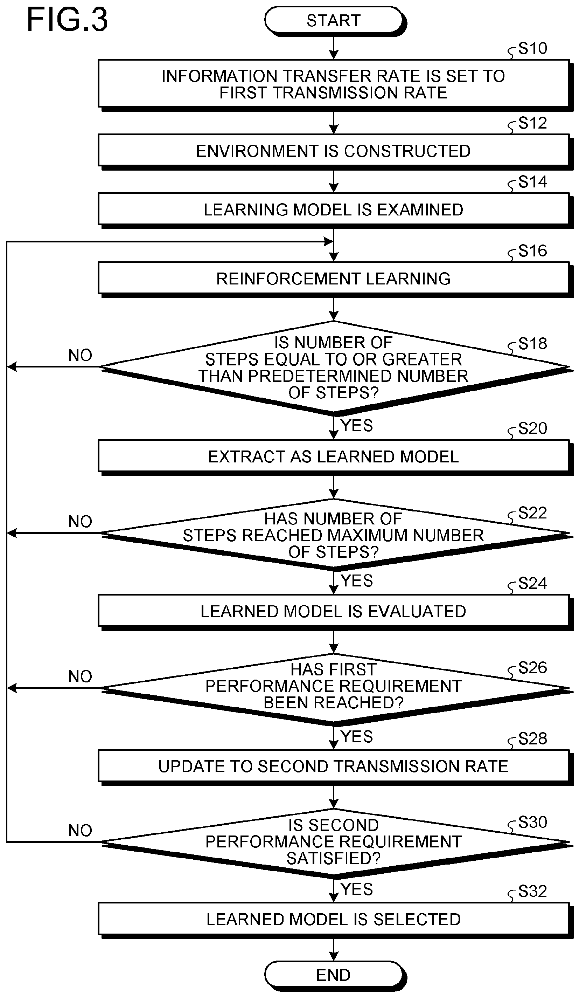

Referring to FIG. 3, the learning process according to the present embodiment will be described. FIG. 3 is a flowchart illustrating an example of the learning process according to the present embodiment. In the following, the process of learning the transmission rate of the information transfer rate of the communication device mounted on the unmanned vehicle will be described.

The setting unit 40 sets the information transfer rate of the communication device of the unmanned vehicle to a first transmission rate (step S10). Specifically, the setting unit 40 sets the first transmission rate that can be said to be sufficiently high as the information transfer rate set for the communication device. The first transmission rate is a kind of the first requirement value. The process then proceeds to step S12.

The setting unit 40 constructs various environments for performing reinforcement learning (step S12). Specifically, the setting unit 40 constructs a simulation environment for performing reinforcement learning. The process then proceeds to step S14.

The setting unit 40 examines a learning model to perform reinforcement learning (step S14). Specifically, the setting unit 40 makes various examinations necessary for carrying out reinforcement learning, for example, examines action decision model (state and action), reward function, deep reinforcement learning algorithm, model granularity, and hyperparameters. The process then proceeds to step S16.

The reinforcement learning unit 50 performs reinforcement learning (step S16). Specifically, the reinforcement learning unit 50 performs learning so that the reward given to the learned model is maximized. The process then proceeds to step S18.

The reinforcement learning unit 50 determines whether the number of steps of performing reinforcement learning is equal to or greater than a predetermined number of steps (step S18). The predetermined number of steps may be set as desired, for example, according to the problem to be handled. If it is determined that the number of steps is equal to or greater than a predetermined number of steps (Yes at step S18), the process proceeds to step S20. If it is determined that the number of steps is not equal to or greater than a predetermined number of steps (No at step S18), the process proceeds to step S16. In other words, in the present embodiment, reinforcement learning is repeated until a predetermined number of steps is reached.

If the determination is Yes at step S18, the model extraction unit 52 extracts a learned model (step S20). Specifically, the model extraction unit 52 extracts all learned models that have been subjected to reinforcement learning for a predetermined number of steps or more. The process then proceeds to step S22.

The reinforcement learning unit 50 determines whether the number of steps of performing reinforcement learning has reached the maximum number of steps (step S22). The maximum number of steps may be set as desired. If it is determined that the number of steps has reached the maximum number of steps (Yes at step S22), the process proceeds to step S24. If it is not determined that the number of steps has reached the maximum number of steps (No at step S22), the process proceeds to step S16. In other words, in the present embodiment, reinforcement learning is repeated until the number of learning steps has reached the maximum number of steps.

If the determination is Yes at step S22, the model evaluation unit 54 evaluates the performance of the learned model in which the number of steps has reached the maximum number of steps (step S24). The process then proceeds to step S26.

The model evaluation unit 54 determines whether the performance of the learned model has reached the first performance requirement (step S26). Specifically, the model evaluation unit 54 determines, , whether the learned model set to the first transmission rate set at step S10 has reached the desired first performance requirement. If it is determined that the performance of the learned model has reached the first performance requirement (Yes at step S26), the process proceeds to step S28. If it is not determined that the performance of the learned model has reached the first performance requirement (No at step S26), the process proceeds to step S16. In other words, reinforcement learning is repeated until it is determined that the performance of the learned model has reached the first performance requirement.

The updating unit 56 updates the first transmission rate set at step S10 to a second transmission rate (step S28). Specifically, the updating unit 56 updates the transmission rate to a second transmission rate lower than the first transmission rate. The second transmission rate is a kind of the second requirement value. The process then proceeds to step S30.

The model evaluation unit 54 determines whether the learned model updated from the first transmission rate to the second transmission rate satisfies the desired second performance requirement (step S30). The second performance requirement may be the same performance as the first performance requirement or may be inferior to the first performance requirement. The second performance requirement may be changed as desired in accordance with the design. For example, the second performance requirement may be changed in accordance with the function to be added to the communication device of the unmanned vehicle. If it is determined that the learned model updated to the second transmission rate satisfies the desired second performance requirement (Yes at step S30), the process proceeds to step S32. If it is not determined that the learned model updated to the second transmission rate satisfies the desired second performance requirement (No at step S30), the process proceeds to step S16. In other words, reinforcement learning is repeated until it is determined that the performance of the learned model satisfies the second performance requirement.

If the determination is Yes at step S30, the model selection unit 58 selects a learned model (step S32). Specifically, the model selection unit 58 selects the learned model determined to satisfy the second performance requirement at step S30 as the learned model to be installed in the computer of the unmanned vehicle. The process in FIG. 3 then ends.

The learned model selected by the learning device 10 is applied to the design of an unmanned vehicle having a communication device, whereby an unmanned vehicle system with a rate lower than the conventional system can be applied. Specifically, the present embodiment can provide an unmanned vehicle system in which the unmanned vehicles can cooperate even in a low-rate communication environment. In other words, in the present embodiment, learning is performed in a high-rate state and thereafter learning is carried out at a lower rate, whereby the data rate required by the unmanned vehicle system can be appropriately set.

### Unmanned Vehicle System

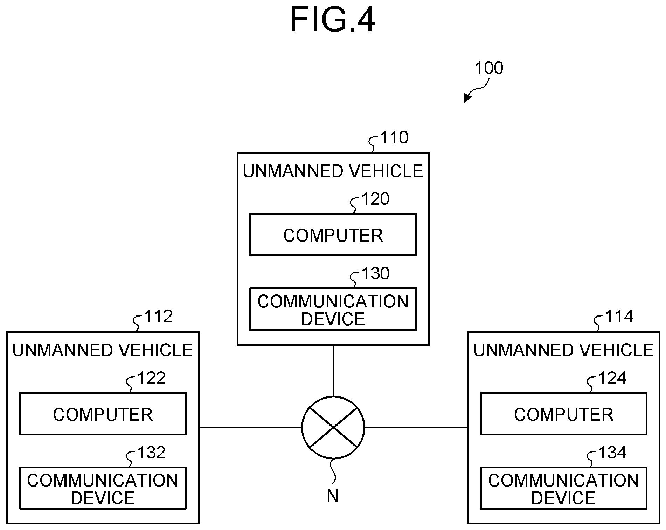

Referring to FIG. 4, a configuration example of the unmanned vehicle system according to embodiments will be described. FIG. 4 is a diagram illustrating a configuration example of the unmanned vehicle system according to embodiments.

As illustrated in FIG. 4, an unmanned vehicle system 100 includes an unmanned vehicle 110, an unmanned vehicle 112, and an unmanned vehicle 114. Unmanned vehicles 110 to 114 are, for example, but not limited to, vehicles, ships, or aircrafts. In the example illustrated in FIG. 4, the unmanned vehicle system 100 includes three unmanned vehicles, but the present disclosure is not limited thereto.

The unmanned vehicle 110 includes a computer 120 and a communication device 130. The unmanned vehicle 112 includes a computer 122 and a communication device 132. The unmanned vehicle 114 includes a computer 124 and a communication device 134. The communication device 130, the communication device 132, and the communication device 134 are communicatively connected via a wireless network N. The network N is, for example, but not limited to, a TDMA network.

The computers 120 to 124 are equipped with, for example, a learned model that satisfies the second performance requirement as selected by the learning device 10 in the process illustrated in FIG. 3. The computers 120 to 124 each include, for example, a processing unit such as a CPU and a storage device such as a RAM or a ROM. The computers 120 to 124 exchange information with other unmanned vehicles through the communication devices 130 to 134, for example, using a learned model that satisfies the second performance requirement. In other words, in the present embodiment, the computers 120 to 124 are equipped with, for example, a learned model, and the computers 120 to 124 communicate through the communication devices using the learned model, whereby the feasibility of the unmanned vehicle system is increased even with a low rate, and performance improvement that is difficult to achieve only with conventional wireless communication designs can be achieved.

The unmanned vehicles 110 to 114 transmit and receive information on each individual unmanned vehicle, using the computers 120 to 124 and the communication devices 130 to 134, respectively. In the present embodiment, the computers 120 to 124 use the learned model selected by the learning device 10 and exchange information with other unmanned vehicles through the communication devices to transmit and receive information on each individual unmanned vehicle at a low rate. This configuration creates a surplus in the resources of the wireless communication line. In other words, the unmanned vehicle system 100 in the present embodiment can create a surplus in the resources of the wireless communication line and thereby can expand functions, for example, extend the effective communication range, ensure function enhancement in the future, improve encryption strength, and reduce the weight and the power consumption of the communication device, and prevent interference with other stations.

The learning device may include a computer including at least a processor and a memory; the learning program may be stored on a (non-transitory) computer-readable storage medium, such as a magnetic disk, an optical disc, or a semiconductor memory, to be executed by the learning device which serves as that computer or the other computer in which the learned model is to be installed.

### Reference Signs List

- 10: Learning device
- 12: Environment unit
- 14: Storage unit
- 16: Control unit
- 20: Motion model
- 22: Environment model
- 24: Reward model
- 30: Reinforcement learning model
- 40: Setting unit
- 42: Learning unit
- 50: Reinforcement learning unit
- 52: Model extraction unit
- 54: Model evaluation unit
- 56: Updating unit
- 58: Model selection unit

## Claims

1. A computer-implemented learning method for allowing a learned model to be installed in a computer (120) of an unmanned vehicle (110) having the computer (120) to learn and a communication device (130) to perform communication based on control using the learned model, the learning method comprising:
setting (S10) a first transmission rate, which is sufficiently high as information transfer rate set for the communication device (130), for the information transfer rate of the communication device (130) controlled by the computer (120) using the learned model;
performing (S16) reinforcement learning to allowa learning model to learn such that a reward (R) given in a simulation environment, set in a reward function, is maximized, wherein the reinforcement learning is performed for the information transfer rate and the reward (R) is given to the learned model;
extracting (S18, S20), as the learned model, a learning model in which a number of learning steps of performing the reinforcement learning is equal to or greater than a predetermined number;
determining (S26) whether performance of the extracted learned model set to the first transmission rate has reached first performance requirement;
if it is not determined (S26(N)) that the performance of the learned model has reached the first performance requirement, repeating the reinforcement learning until it is determined that the performance of the learned model has reached the first performance requirement;
if performance of the learned model is determined to have reached the first performance requirement (S26(Y)), updating (S28) the first transmission rate to a second transmission rate lower than the first transmission rate;
determining (S30) whether performance of the learned model updated to the second transmission rate satisfies second performance requirement being the same as or inferior to the first performance requirement;
if it is not determined that the learned model updated to the second transmission rate satisfies the second performance requirement (S30(N)), repeating the reinforcement learning until it is determined that the performance of the learned model satisfies the second performance requirement;
if performance of the learned model updated to the second transmission rate is determined to satisfy the second performance requirement (S30(Y)), selecting (S32) the learned model that satisfies the second performance requirement at the second transmission rate as the learned model to be installed in the computer (120).

2. The learning method according to claim 1, wherein updating (S28) the first transmission rate changes the second transmission rate in accordance with the second performance requirement.

3. A learning device (10) comprising means for carrying out the steps of the learning method of claim 1 or 2, comprising:
a setting unit (40) configured to set the first transmission rate;
a reinforcement learning unit (50) configured to learn the learning model;
a model extraction unit (52) configured to extract the learned model;
a model evaluation unit (54) configured to determine whether performance of the learned model has reached first performance requirement;
an updating unit (56) configured to update the first requirement value to a second requirement value different from the first requirement value; and
a model selection unit (58) configured to select the learned model to be installed in the computer.

4. An unmanned vehicle (110) comprising:
a computer (120) in which the learned model learned by the learning device (10) according to any one of claim 3 is installed; and
a communication device (130), wherein
the computer (120) performs communication through the communication device (130) using the learned model.

5. A wireless communication system comprising a plurality of unmanned vehicles (110) each corresponding to the unmanned vehicle (110) according to claim 4.

6. A computer program comprising instructions which, when the program is executed by a computer, cause the computer to carry out the steps of the learning method of claim 1 or 2.

7. A computer-readable medium comprising instructions which, when executed by a computer, cause the computer to carry out the steps of the learning method of claim 1 or 2.

## Patentansprüche

1. Computerimplementiertes Lernverfahren zum Ermöglichen, dass ein erlerntes Modell in einem Computer (120) eines unbemannten Fahrzeugs (110) installiert wird, was den Computer (120) zum Lernen und eine Kommunikationsvorrichtung (130) zum Durchführen von Kommunikation basierend auf einer Steuerung unter Verwendung des erlernten Modells aufweist, wobei das Lernverfahren Folgendes umfasst:
Festlegen (S10) einer ersten Übertragungsrate, die als für die Kommunikationsvorrichtung (130) eingestellte Informationsübertragungsrate hinreichend hoch ist, für die Informationsübertragungsrate der durch den Computer (120) unter Verwendung des erlernten Modells gesteuerten Kommunikationsvorrichtung (130);
Durchführen (S16) von Verstärkungslernen, um ein Lernmodell so lernen zu lassen, dass eine Belohnung (R), die in einer Simulationsumgebung gegeben und in einer Belohnungsfunktion festgelegt ist, maximiert wird, wobei das Verstärkungslernen für die Informationsübertragungsrate durchgeführt wird und die Belohnung (R) dem erlernten Modell gegeben wird;
Extrahieren (S18, S20) eines Lernmodells als erlerntes Modell, bei dem eine Anzahl von Lernschritten des Durchführens des Verstärkungslernens gleich oder größer als eine vorbestimmte Zahl ist;
Bestimmen (S26), ob eine Leistung des extrahierten erlernten Modells, das auf die erste Übertragungsrate eingestellt ist, eine erste Leistungsanforderung erreicht hat;
wenn nicht bestimmt wird (S26(N)), dass die Leistung des erlernten Modells die erste Leistungsanforderung erreicht hat, Wiederholen des Verstärkungslernens, bis bestimmt wird, dass die Leistung des erlernten Modells die erste Leistungsanforderung erreicht hat;
wenn bestimmt wird, dass die Leistung des erlernten Modells die erste Leistungsanforderung erreicht hat (S26(Y)), Aktualisieren (S28) der ersten Übertragungsrate auf eine zweite Übertragungsrate, die niedriger als die erste Übertragungsrate ist;
Bestimmen (S30), ob eine Leistung des auf die zweite Übertragungsrate aktualisierten erlernten Modells eine zweite Leistungsanforderung erfüllt, die gleich wie oder geringer als die erste Leistungsanforderung ist;
wenn nicht bestimmt wird, dass das auf die zweite Übertragungsrate aktualisierte erlernte Modell die zweite Leistungsanforderung erfüllt (S30(N)), Wiederholen des Verstärkungslernens, bis bestimmt wird, dass die Leistung des erlernten Modells die zweite Leistungsanforderung erfüllt;
wenn bestimmt wird, dass eine Leistung des auf die zweite Übertragungsrate aktualisierten erlernten Modells die zweite Leistungsanforderung erfüllt (S30(Y)), Auswählen (S32) des erlernten Modells, das die zweite Leistungsanforderung bei der zweiten Übertragungsrate erfüllt, als das in den Computer (120) zu installierende erlernte Modell.

2. Lernverfahren nach Anspruch 1, wobei das Aktualisieren (S28) der ersten Übertragungsrate die zweite Übertragungsrate in Übereinstimmung mit der zweiten Leistungsanforderung ändert.

3. Lernvorrichtung (10) umfassend Mittel zum Durchführen der Schritte des Lernverfahrens nach Anspruch 1 oder 2, umfassend:
eine Einstellungseinheit (40), die so konfiguriert ist, dass sie die erste Übertragungsrate festlegt;
eine Verstärkungslerneinheit (50), die so konfiguriert ist, dass sie das Lernmodell lernt;
eine Modellextraktionseinheit (52), die so konfiguriert ist, dass sie das erlernte Modell extrahiert;
eine Modellbewertungseinheit (54), die so konfiguriert ist, dass sie bestimmt, ob die Leistung des erlernten Modells die erste Leistungsanforderung erreicht hat;
eine Aktualisierungseinheit (56), die so konfiguriert ist, dass sie den ersten Anforderungswert auf einen vom ersten Anforderungswert unterschiedlichen zweiten Anforderungswert aktualisiert; und
eine Modellauswahleinheit (58), die so konfiguriert ist, dass sie das in den Computer zu installierende erlernte Modell auswählt.

4. Unbemanntes Fahrzeug (110), umfassend:
einen Computer (120), in dem das von der Lernvorrichtung (10) nach einem der Ansprüche 3 gelernte erlernte Modell installiert ist; und
eine Kommunikationsvorrichtung (130), wobei
der Computer (120) Kommunikation durch die Kommunikationsvorrichtung (130) unter Verwendung des erlernten Modells durchführt.

5. Drahtloskommunikationssystem, umfassend eine Vielzahl von unbemannten Fahrzeugen (110), die jeweils dem unbemannten Fahrzeug (110) nach Anspruch 4 entsprechen.

6. Computerprogramm, das Anweisungen umfasst, die, wenn das Programm von einem Computer ausgeführt wird, den Computer veranlassen, die Schritte des Lernverfahrens nach Anspruch 1 oder 2 durchzuführen.

7. Computerlesbares Medium, das Anweisungen umfasst, die, wenn sie von einem Computer ausgeführt werden, den Computer veranlassen, die Schritte des Lernverfahrens nach Anspruch 1 oder 2 durchzuführen.

## Revendications

1. Procédé d'apprentissage mis en œuvre par ordinateur pour permettre qu'un modèle appris soit installé dans un ordinateur (120) d'un véhicule sans pilote (110) présentant l'ordinateur (120) en vue d'apprendre, et un dispositif de communication (130) pour mettre en œuvre une communication sur la base d'une commande en utilisant le modèle appris, le procédé d'apprentissage comprenant :
le réglage (S10) d'un premier débit de transmission, qui est suffisamment élevé, en tant que débit réglé de transfert d'informations pour le dispositif de communication (130), pour le débit de transfert d'informations du dispositif de communication (130) commandé par l'ordinateur (120) utilisant le modèle appris ;
la mise en œuvre (S16) d'un apprentissage par renforcement, pour permettre à un modèle d'apprentissage d'apprendre de telle sorte qu'une récompense (R) attribuée dans un environnement de simulation, définie dans une fonction de récompense, soit maximisée, dans lequel l'apprentissage par renforcement est mis en œuvre pour le débit de transfert d'informations, et la récompense (R) est attribuée au modèle appris ;
l'extraction (S18, S20), en tant que modèle appris, d'un modèle d'apprentissage dans lequel un nombre d'étapes d'apprentissage de mise en œuvre de l'apprentissage par renforcement est supérieur ou égal à un nombre prédéterminé ;
le fait (S26) de déterminer si la performance du modèle appris extrait, réglé sur le premier débit de transmission, a atteint une première exigence de performance ;
s'il n'est pas déterminé (S26(N)) que la performance du modèle appris a atteint la première exigence de performance, la répétition de l'apprentissage par renforcement jusqu'à ce qu'il soit déterminé que la performance du modèle appris a atteint la première exigence de performance ;
si la performance du modèle appris est déterminée comme ayant atteint la première exigence de performance (S26(Y)), la mise à jour (S28) du premier débit de transmission en un second débit de transmission inférieur au premier débit de transmission ;
le fait (S30) de déterminer si la performance du modèle appris mis à jour au second débit de transmission satisfait une seconde exigence de performance, qui est la même que la première exigence de performance, ou qui est inférieure à celle-ci ;
si l'on ne détermine pas que le modèle appris mis à jour au second débit de transmission satisfait la seconde exigence de performance (S30(N)), la répétition de l'apprentissage par renforcement jusqu'à ce qu'il soit déterminé que la performance du modèle appris satisfait la seconde exigence de performance ;
si la performance du modèle appris mis à jour au second débit de transmission est déterminée comme satisfaisant la seconde exigence de performance (S30(Y)), la sélection (S32) du modèle appris qui satisfait la seconde exigence de performance au second débit de transmission en tant que modèle appris devant être installé dans l'ordinateur (120).

2. Procédé d'apprentissage selon la revendication 1, dans lequel la mise à jour (S28) du premier débit de transmission modifie le second débit de transmission conformément à la seconde exigence de performance.

3. Dispositif d'apprentissage (10) comprenant des moyens pour mettre en œuvre les étapes du procédé d'apprentissage selon la revendication 1 ou la revendication 2, comprenant :
une unité de réglage (40), configurée pour régler le premier débit de transmission ;
une unité d'apprentissage par renforcement (50), configurée pour apprendre le modèle d'apprentissage ;
une unité d'extraction de modèle (52), configurée pour extraire le modèle appris ;
une unité d'évaluation de modèle (54), configurée pour déterminer si la performance du modèle appris a atteint une première exigence de performance ;
une unité de mise à jour (56), configurée pour mettre à jour la première valeur d'exigence en une seconde valeur d'exigence différente de la première valeur d'exigence ; et
une unité (58) de sélection de modèle, configurée pour sélectionner le modèle appris devant être installé dans l'ordinateur.

4. Véhicule sans pilote (110), comprenant :
un ordinateur (120) dans lequel est installé le modèle appris ayant fait l'objet d'un apprentissage par le dispositif d'apprentissage (10) selon l'une quelconque de la revendication 3 ; et
un dispositif de communication (130), dans lequel
l'ordinateur (120) met en œuvre une communication via le dispositif de communication (130) en utilisant le modèle appris.

5. Système de communication sans fil comprenant une pluralité de véhicules sans pilote (110) correspondant chacun au véhicule sans pilote (110) selon la revendication 4.

6. Programme d'ordinateur comprenant des instructions qui, lorsque le programme est exécuté par un ordinateur, amènent l'ordinateur à mettre en œuvre les étapes du procédé d'apprentissage selon la revendication 1 ou la revendication 2.

7. Support lisible par ordinateur comprenant des instructions qui, lorsqu'elles sont exécutées par un ordinateur, amènent l'ordinateur à mettre en œuvre les étapes du procédé d'apprentissage selon la revendication 1 ou la revendication 2.
